# EUROPEAN PATENT APPLICATION

(11) **EP 4 273 073 A1**
(43) Date of publication of application: **08.11.2023**
(21) Application number: 23170853.8
(22) Date of filing: 28.04.2023
(51) Int. Cl.: B65G 29/00, B65G 47/256, B65G 47/82, B65G 54/02, B65B 11/28, B65G 47/84

(54) **UNIT FOR CONVEYING A WORKING UNIT FOR TRANSPORTING A PRODUCT**

(30) Priority: 02.05.2022 IT 202200008555
(71) Applicant: Azionaria Costruzioni Macchine Automatiche A.C.M.A. S.p.A., 40131 Bologna (IT)
(72) Inventor: RIGHETTI, Marco, 40131 BOLOGNA (IT); MELCHIONDA, Maria Livia, 40131 BOLOGNA (IT)
(74) Representative: Casadei, Barbara

(57) **Abstract**

This invention relates to a unit for conveying at least one working unit (2) for transporting at least one product (P), wherein at least part of it is configured to pass from a first position to a second position which is translated relative to the first position; the unit (1) comprises at least one feed path (3) of the working unit (2) and movement means (5) for moving the working unit (2) along the path (3);
each working unit (2) comprises a rolling element (6) configured to advance along the path (3); an actuating means (7) is configured to translate the rolling element (6) while the movement means (5) are in a stop condition; the translation of the rolling element (6) causes at least part of the working unit (2) to move from the first position to the second position.

## Description

This invention relates to a unit for conveying at least one working unit for transporting at least one product.

In the prior art, a working unit is generally moved along defined trajectories, including translational trajectories, using a movement device comprising a cam and a cam follower roller.

In particular, the cam may have a grooved path in which the cam follower is made to run.

To perform a translation, the cam path may present a trajectory with limited curvature radiuses which are difficult for the cam follower to maintain.

Moreover, criticalities arise in automatic machines with conveying units driven with alternating, non-continuous motion, where translations need to be performed via cams and respective cam followers, which is impossible during the stops of the conveying unit, since there is no relative motion between cam and follower.

In order to overcome the above-mentioned drawbacks, the Applicant has devised a unit for conveying at least one working unit for transporting at least one product, where at least part of it is configured to pass from a first position to a second position which is translated relative to the first position. Preferably, the unit comprises at least one feed path of the working unit and movement means for moving the working unit along the path.

Preferably, each working unit comprises a rolling element configured to advance along the path.

Preferably, an actuating means is configured to translate the rolling element while the conveying means are in a stop condition.

The translation of the rolling element causes at least part of the working unit to move from the first position to the second position.

Preferably, a control unit is configured to drive the actuating means while the movement means are in a stop condition.

In particular, the control unit is configured to receive a rejection signal for rejecting the product being transported by the working unit and to drive the actuating means as a result of receiving the rejection signal.

The control unit is also configured to drive the actuating means based on a stop condition of the transporting working unit.

Preferably, the movement means have alternating motion.

Preferably, the movement means comprise at least one cam provided with the first feed path and the second feed path.

Preferably, the unit comprises a rotary means that rotates about its axis of rotation with alternate motion from a loading station, where a working unit receives a respective product, to an unloading station, where a working unit releases the product.

Preferably, the control unit is configured to drive the actuating means and to translate the rolling element from the first path to the second path at the unloading station.

Alternatively, the unit comprises linear motors for feeding the working units and the actuating means is configured to translate a stretch of the feed path. Further features of the invention and its advantages are more apparent in the following exemplary, hence non-limiting description of preferred embodiments of a unit for conveying at least one working unit for transporting at least one product, as illustrated in the accompanying drawings, in which:
- Figure 1 is a schematic view of a first embodiment of a conveying unit according to this invention, in a first configuration;
- Figure 2 is a schematic view of a second configuration of the unit of Figure 1;
- Figure 3 is a detail from Figure 2;
- Figures 4 to 6 are schematic views illustrating a sequence of operating steps of a second embodiment of the conveying unit according to this invention.

The reference numeral 1 denotes a unit for conveying at least one working unit 2 for transporting at least one product P.

At least part of each working unit 2 is configured to pass from a first position to a second position which is translated relative to the first position.

The unit 1 comprises at least one feed path 3 of the working unit 2 and movement means 5 for moving the working unit 2 along the path 3.

Each working unit 2 comprises a rolling element 6 configured to advance along the path 3.

An actuating means 7 is configured to translate the rolling element 6 while the movement means 5 are in a stop condition.

By way of non-limiting example, the actuating means 7 comprises a pneumatic piston or a crank mechanism or other mechanism.

In other words, the actuating means 7 is configured to perform a translation. The translation of the rolling element 6 causes at least part of the working unit 2 to move from the first position to the second position.

In other words, the unit 1 comprises an actuating means 7 configured to translate the rolling element 6 from a first position, corresponding to a first stretch of path, to a second position, corresponding to a second stretch of path, located at a position which is translated relative to the first stretch of path.

The unit 1 comprises a control unit 16 configured to drive the actuating means 7 while the movement means 5 are in a stop condition.

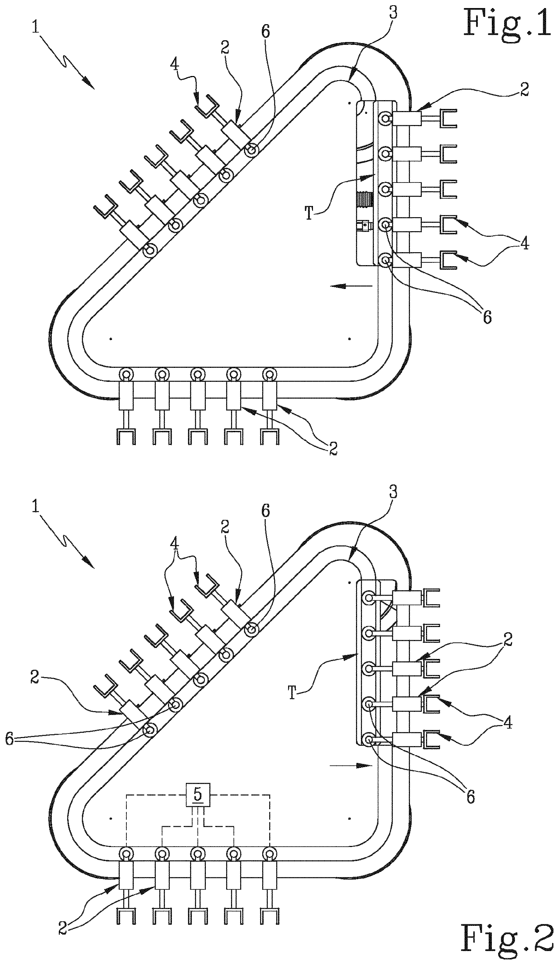

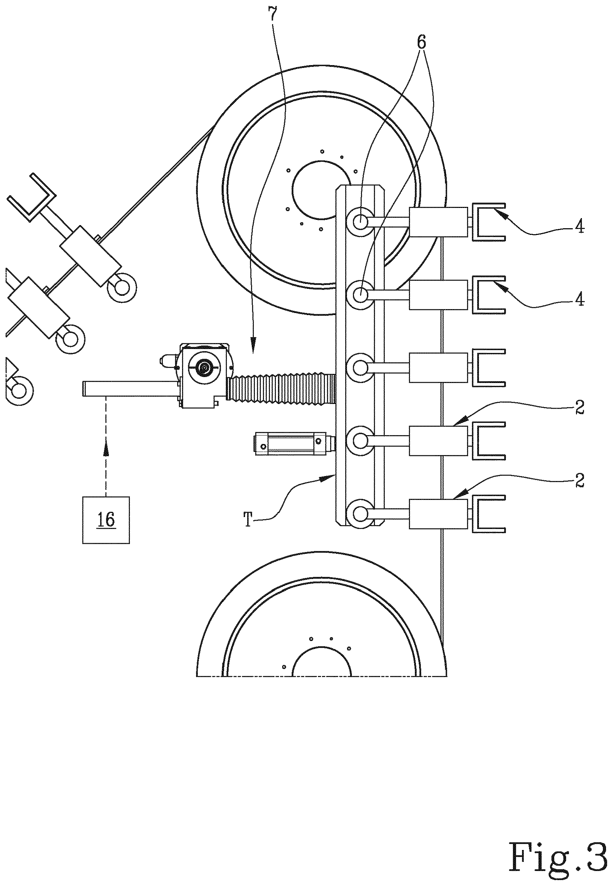

With reference to Figures 1 to 3, each working unit 2 is provided with a retaining element 4 for holding at least part of a product P.

The movement means 5 comprise linear motors, not illustrated.

In the embodiment illustrated, each working unit 3 comprises a retaining element 4 for holding at least part of the product P.

In particular, the retaining element 4 has the shape of a C.

In this embodiment, the retaining element 4 passes from the first position to the second position, which is translated relative to the first position.

With respect to a fixed reference, the first position of the retaining element 4 is an advanced position relative to the second position.

In other words, by passing from the first position to the second position, the retaining element 4 moves closer to a fixed reference.

By passing from the second position to the first position, on the other hand, the retaining element 4 moves away from a fixed reference.

In this embodiment, the actuating means 7 translates a stretch T of the path 3 from a starting position to an end position, and vice versa.

That way, the rolling elements 6, engaged in the stretch T, are also made to translate from the starting position to the end position.

In other words, the actuating means 7 imparts a translation to the rolling elements 6 indirectly via the stretch T of the feed path 3.

At the end position, the rolling elements 6 continue to advance along the path 3 and are disengaged from the stretch T, which is returned to its starting position by the actuating means 7, ready to receive the rolling elements 6 again.

The translation of the stretch T from the starting position to the end position is carried out while the movement means 5 are in a stop condition.

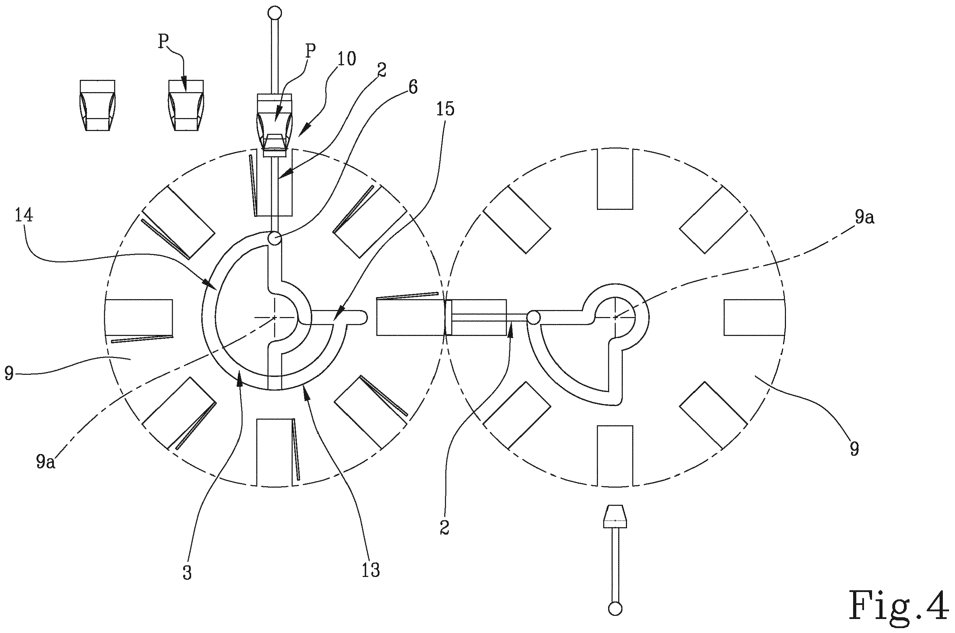

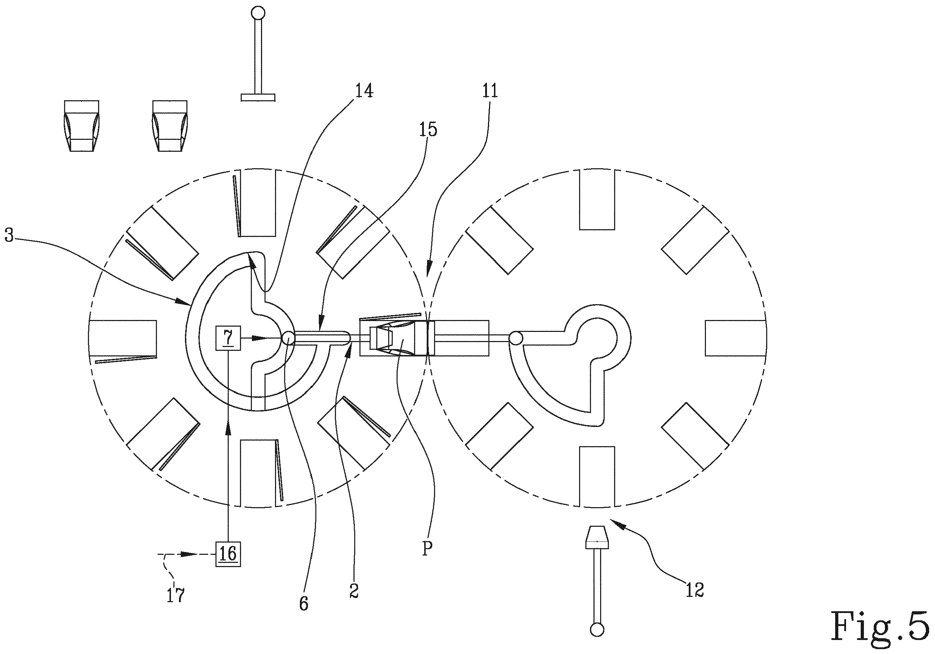

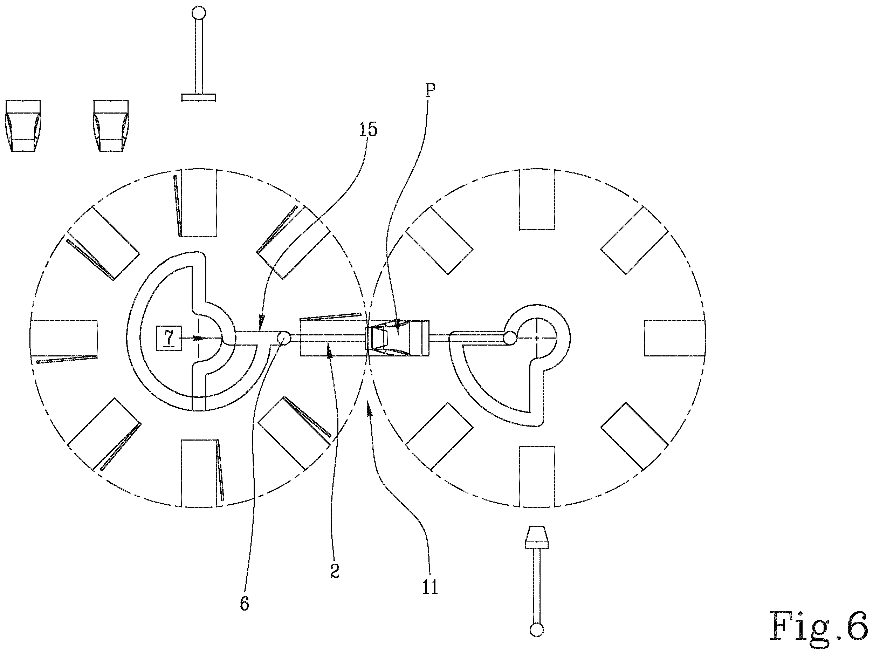

With reference to Figures 4 to 6, the unit 1 comprises a rotary means 9 that rotates about its axis of rotation 9a with alternate motion from a loading station 10, where a working unit 2 receives a respective product P, to an unloading station 11, where a working unit 2 releases the product P.

The movement means 5 include a cam 13 which comprises the feed path 3.

In particular, the feed path 3 comprises a first stretch 14 and a second stretch 15 which are connected to each other.

The second stretch 15 is a straight stretch along which each working unit 2 is translated to pass from the first position to the second position.

In this embodiment, the first position is a retracted position and the second position is an advanced position with respect to a fixed reference.

In this variant embodiment, the actuating means 7 is configured to act directly on the rolling element 6 to translate it along the second stretch 15 of the feed path 3.

At the unloading station 11, the unit 1 comprises a further rotary means 9 that rotates about its axis of rotation 9a with alternate motion and comprising respective working units 2, each configured to pick up the product P from the unloading station and to convey it towards an outfeed station 12.

In this embodiment, the control unit 16 is configured to drive the actuating means 7 to translate the rolling element 6 at the unloading station 11.

Alternatively, the control unit 16 is configured to receive a rejection signal 17 for rejecting the product P being transported by the working unit and to drive the actuating means 7 as a result of receiving the rejection signal 17.

## Claims

1. A unit for conveying at least one working unit (2) for transporting at least one product (P) comprising at least one feed path (3) of the working unit (2) and movement means (5) for moving the working unit (2) along the path (3);
each working unit (2) comprises a rolling element (6) configured to advance along the path (3);
the unit (1) comprises an actuating means (7) configured to translate the rolling element (6) from a first position, corresponding to a first stretch of path, to a second position, corresponding to a second stretch of path, located at a position which is translated relative to the first stretch of path; a control unit (16) configured to drive the actuating means (7) with the movement means (5) in a stop condition.

2. The unit according to claim 1, **characterized in that** the control unit (16) is configured to receive a rejection signal (17) for rejecting the product (P) being transported by the working unit (2) and to drive the actuating means (7) as a result of receiving the rejection signal (17).

3. The unit according to any one of the preceding claims, **characterized in that** the movement means (5) are provided with alternate motion.

4. The unit according to any one of the preceding claims, **characterized in that** the movement means (5) comprise at least one cam (13) comprising the feed path (3).

5. The unit according to any one of the preceding claims, **characterized in that** it comprises a rotary means (9) that rotates about its axis of rotation (9a) with alternate motion from a loading station (10), where a working unit (2) receives a respective product (P), to an unloading station (11), where a working unit (2) releases the product (P);
the control unit (16) is configured to drive the actuating means (7) to translate the rolling element (6) at the unloading station (11).

6. The unit according to any one of the preceding claims, **characterized in that** it comprises linear motors for feeding the working units (2) and **in that** the actuating means (7) is configured to translate a stretch (T) of the feed path (3).
